# EUROPÄISCHE PATENTSCHRIFT

(11) **EP 1 104 853 B1**
(45) Veröffentlichungstag und Bekanntmachung des Hinweises auf die Patenterteilung: **18.09.2002**
(21) Anmeldenummer: 00125560.3
(22) Anmeldetag: 22.11.2000
(51) Int. Cl.: F16B 21/07, F16B 5/06, F16F 1/373

(54) **Schwingungsdämpfende Verbindungsanordnung zum lösbaren Verbinden zweier Bauteile mit einem auf einem hülsengeführten Bolzen verschiebbaren Entriegelungsteil**
Vibration damping device for detachably connecting two parts with a guided unlocking sleeve
Dispositif de fixation détachable de deux pieces antivibratoire avec un manchon enfilable de déverrouilage

(30) Priorität: 23.11.1999 DE 29920499 U
(43) Veröffentlichungstag der Anmeldung: 06.06.2001
(73) Patentinhaber: Schwarz Verbindungs-Systeme GmbH, 75382 Althengstett (DE)
(72) Erfinder: Schwarz, Helmut, 71263 Weil der Stadt (DE)
(74) Vertreter: Blutke, Klaus Wilhelm, Dipl.-Ing.

(56) Entgegenhaltungen:
- DE-A- 4 138 047
- DE-U- 9 004 103
- US-A- 3 896 698
- US-A- 4 522 378
- US-A- 4 921 371

## Beschreibung

Die Erfindung bezieht sich auf eine Anordnung zum lösbaren Verbinden zweier Bauteile, bei der an beiden Bauteilen Elemente dieser Anordnung befestigt sind, welche miteinander verbunden und voneinander gelöst werden können.

Eine solche zu den sogenannten Federclipverbindungen zählende Verbindungsanordnung mit einem auf einem hülsengeführten Bolzen verschiebbaren Entriegelungsteil ist z.B. im Gebrauchsmuster DE-U-90 04 103.8 und in der deutschen Patentschrift DE 41 38 047 beschrieben.

Diese Verbindungsanordnung hat neben dem schnellen Verbindungsaufbau den Vorteil der einfachen Demontage für Wartungsarbeiten und Reparaturen. Derartige Anordnungen werden vorzugsweise in Flugzeugen und Kraftfahrzeugen zur Befestigung von Innenverkleidungen benutzt.

Die im vorgenannten Patent DE 41 38 047 beschriebene Verbindungsanordnung bezieht sich auf mit fluchtenden Öffnungen versehene Bauteile , bei der in einer Bohrung des einen zu verbindenden Teils ein federnd in einer Hülse geführter Bolzen vorgesehen ist und am Bolzenende ein Verriegelungsteil befestigt ist, das sich beim Eindrücken des Bolzens in einer am anderen Teil befestigten Feder lösbar verhakt und bei dem ein auf dem Bolzen bis zu einer Schulter verschiebbares Entriegelungsteil bei weiterem Eindrücken des Bolzens die Feder zum Lösen der Verbindung spreizt.

Diese Verbindungsanordnung nach dem Stand der Technik überträgt in einem Bauteil unerwünscht auftretende Schwingungen auf das andere Bauteil.

Zur Vermeidung dieses Nachteils ist es Aufgabe der Erfindung, eine schwingungsdämpfende Verbindungsanordnung vorzusehen. Desweiteren ist es Aufgabe der Erfindung,für eine solche schwingungsdämpfende Verbindungsanordnung eine besonders wirksame Blattfederanordnung vorzusehen.

Diese Aufgabe der Erfindung wird in vorteilhafter Weise durch die im Anspruch 1 genannten Merkmale gelöst.
Vorteilhafte Weiterbildungen der Erfindung sind in den Unteransprüchen gekennzeichnet.
Ausführungsbeispiele der Erfindung sind in den Zeichnungen dargestellt und werden im folgenden näher beschrieben. Es zeigen:

FIG.1
eine Schnittdarstellung einer ersten Ausführungsformen der erfindungsgemäßen Verbindungsanordnung
mit einem hülsengeführten Bolzen, einem zwischen Ver- und Entriegelungsteil bildbaren ringförmigen Raum zum Eingriff von Blattfederenden und
mit einem Schwingungsdämpferring, in welchem Klammern für eine Sicherungsscheibe und Blattfedern eingebettet sind.

FIG.2
eine Schnittdarstellungen einer zweiten Ausführungsformen der erfindungsgemäßen Verbindungsanordnung
mit einem hülsengeführten Bolzen, einem zwischen Ver- und Entriegelungsteil bildbaren ringförmigen Raum zum Eingriff von Blattfederenden und
mit einem Schwingungsdämpferring, an dessen Innenwandung eine Klemmhalterung für einen Sicherungsring und die Blattfeder-Anordnung angebracht ist.

FIG.3
eine perspektivische Ansicht einer hohlkegelstumpf-ähnlichen Blattfeder-Anordnung mit drei auf einem gemeinsamen Basis-Ring angeordneten Blattfederarmen.

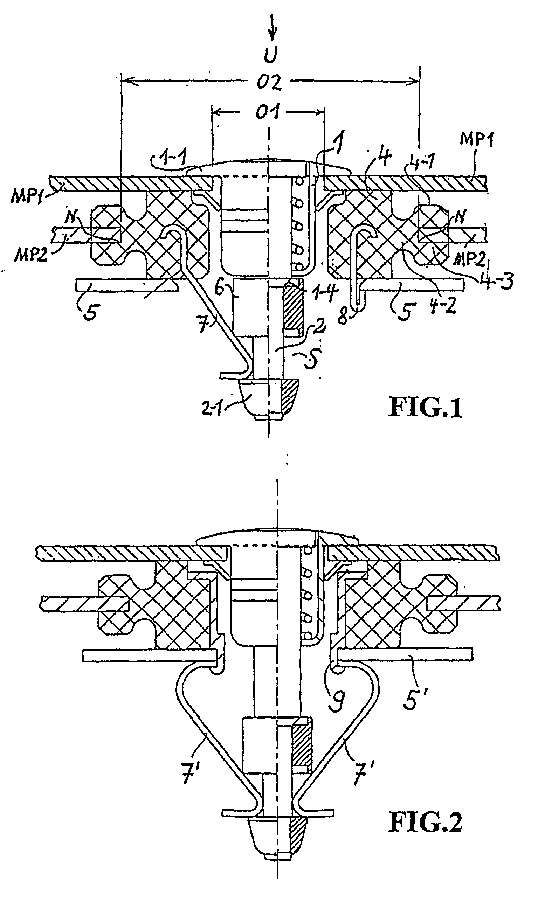

FIG. 1 zeigt eine Schnittdarstellung einer ersten Ausführungsformen der erfindungsgemäßen Verbindungsanordnung mit einem hülsen(1)geführten Bolzen 2, einem zwischen Ver-(2-1) und Entriegelungsteil 6 bildbaren ringförmigen Raum S zum lösbaren Eingriff des freien Endes des Armes einer Blattfeder (7) (Hinweis: aus Vereinfachungsgründen wird in FIG. 1 nur ein Blattfederarm dargestellt, für eine gut funktionierende Verbindungsanordnung sind mindestens 2, vorzugsweise 3 Blattfederarme erforderlich) und
mit einem Schwingungsdämpferring 4, in welchem Klammern 8 für eine Sicherungsscheibe 5 und die Blattfedern 7 eingebettet sind.

Die Hülse 1 ist buchsenähnlich in der Bohrung 01 des ersten Bauteils MP1 befestigt. (Rillen R in der Hülse dienen dem Eingriff eines Sicherungsringes in Anpassung an unterschiedliche Stärken des Bauteils MP1 und dienen einem Toleranzausgleich).Der in der Hülse geführte Bolzen 2 ragt aus der unteren Öffnung der Hülse heraus. Auf dem herausragenden Stück des Bolzens ist ein ringförmiges Entriegelungselement (Spreizelement) 6 verschieblich angeordnet. Der Bolzen hat an seinem Ende ein Verriegelungsstück 2-1. Der Durchmesser dieses Verriegelungsstückes ist größer als der des Bolzens im Verschiebebereich des Entriegelungsstückes. Letzteres ist zwischen diesem Verriegelungsteil 2-1 und dem Schulterabsatz 1-4 am Bolzen 1 verschiebbar angeordnet.
In der in FIG. 1 dargestellten Position ist zwischen dem Entriegelungsteil 6 und dem Verriegelungsteil 2-1 ein ringförmiger Eingriffsbereich S für die Enden der Blattfedern 7 ausgebildet.
Zum Lösen der Verbindung wird der Bolzen in Richtung U gegen die Kraft der Blattfederenden gedrückt ,dabei spreizt das sich mitbewegende Entriegelungsteil (Spreizring) 6 die Enden der Blattfedern aus dem sich verkleinernden Eingriffsbereich S :das Bauteil MP1 samt der mit ihm verbundenen Hülse 1 kann dann aus dem Bereich der gespreizten Blattfeder(7)enden herausgezogen werden. Die Blattfeder 7 ist über den Schwingungsdämpferring 4 mit dem zweiten Bauteil MP2 verbunden.

Zur Verbindung beider Bauteile MP1 und MP2 wird der Bolzen 1 und mit ihm das konische Verriegelungsteil 2-1 in Richtung U gedrückt; dabei werden die Enden der Blattfedern nach außen gepreizt bis sie schließlich in den Engriffsbereich S "einrasten" (einhaken), wobei das Entriegelungsteil durch die Blattfederenden entgegen der Richtung U verschoben wird.

Der Schwingungsdämpferring 4 weist einen peripheren Wulst 4-1 mit einem Hals-(4-2) und einem Kopfteil 4-3 auf. Im Kopfteil 4-3 ist eine Nut N zur Aufnahme des Randes der Bohrung 02 im zweiten Bauteil MP2 vorgesehen.

Der Sicherungsring 5 - er verhindert, daß bei Extrembelastung in der entgegengesetzten Richtung zu U der Schwingungsdämpfungsring nicht durch die Bohrung O1 hindurchgezogen werden kann- hat einen Außendurchmesser größer als der Bohrungsdurchmesser 02 .

Er ist durch Klammern 8 mit dem Schwingungsdämpferring 4 verbunden, die ebenso wie die Blattfedern 7 in diesen Schwingungsdämpferring eingebettet sind.

Der Schwingungsdämpferring 4 kann aus schwingungsdämpfenden Materialien wie Gummi, Kunststoff (insbesondere Silikon) oder dergleichen hergestellt sein.

FIG.2 zeigt
eine Schnittdarstellung einer zweiten Ausführungsformen der erfindungsgemäßen Verbindungsanordnung
mit einem hülsengeführten Bolzen, einem zwischen Ver- und Entriegelungsteil bildbaren ringförmigen Raum zum Eingriff von Blattfederenden und
mit einem Schwingungsdämpferring, an dessen Innenwandung eine Klemmhalterung 9 für den Sicherungsring 5' und die Blattfederanordnung 7' angebracht ist.
Bis auf die Befestigung des Sicherungsringes 5' und der Blattfedern 7' entspricht die in FIG. 2 gezeigte Ausführungsform der in FIG. 1.
In der Ausführungsform gemäß FIG.2 sind die Blattfedern und der Sicherungsring von einer die Innenwandung des Schwingungsdämpferringes übergreifenden Klemmhalterung 9 gehalten.
Durch diese Klemmhalterung bedingt ergibt sich eine größere Bauhöhe dieser Verbindungsanordnung als in FIG.1.

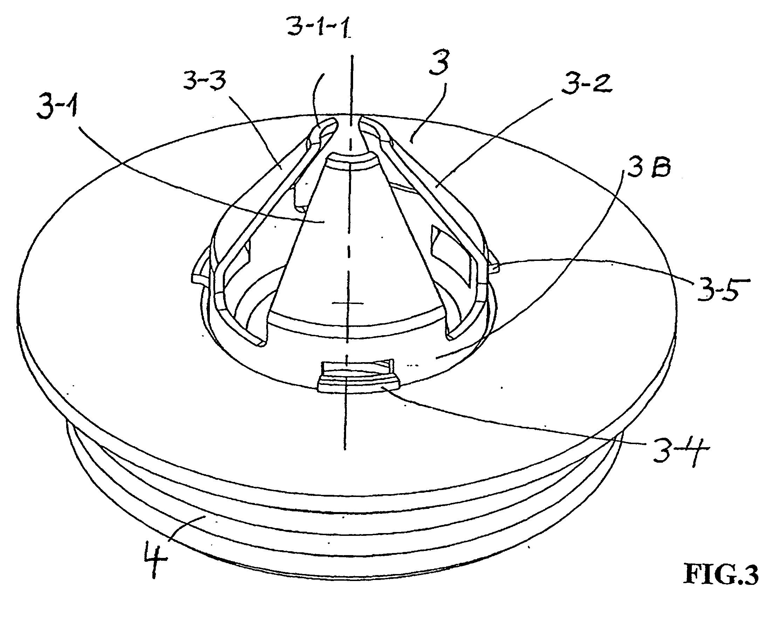

Auf eine weitere Möglichkeit der Befestigung wird im Zusammenhang mit der Darstellung in FIG. 3 hingewiesen.

Die Blattfeder-Anordnung kann unterschiedlich ausgebildet sein. So können z.B. getrennte oder miteinander verbundene Blattfedern verwendet werden, deren freie Enden zum form- und kraftschlüssigen Eingriff in den Eingriffsraum ausgebildet sind. Die Blattfederarme können streifenförmig, sich zum freien Ende hin verjüngend o.a. ausgebildet sein.
Das feste Ende der Blattfeder kann unterschiedlich fixiert sein.
Der ringförmige Eingriffsraum S erfordert eine Blattfederanordnung mit mindestens zwei, vorzugsweise
drei Blattfederarmen, die auf einem gedachten Umfang gleichmäßig verteilt sein sollen.

FIG.3 zeigt
eine perspektivische Ansicht einer hohlkegelstumpf-ähnlichen Blattfeder-Anordnung 3 mit drei auf einem gemeinsamen Basis-Ring angeordneten Blattfederarmen 3-1, 3-2 und 3-3.

Die Blattfederarme verjüngen sich zu ihrem freien Ende hin. Sie haben eine gemeinsame Basis 3-B, die kreisringförmig zusammengebogen ist. Die freien Enden der Blattfederarme sind nach innen einander zugeneigt. Sie bilden Segmente eines gedachten Hohl-Kegel-Stumpfes. Der obere Rand 3-1-1 ihres freien Endes verläuft in Aufsicht kreisringsegmentförmig, passend für einen formschlüssigen Eingriff in den ringförmigen Eingriffsraum S.
In einer Schnittbetrachtung bei einer durch die gedachte Achse der dargestellten Blattfeder-Anordnung 3 hindurchgehenden Schnittebene ist das freie Blattfederende leicht nach außen gebogen, so daß sich eine störungsfreie Spreizung durch das Ent- bzw Verriegelungsteil (mit einer konischen Spitze) ergibt.

Das Basisteil 3-B weist nach außen weisende Ausklinkungen 3-4 , 3-5 ,.. auf, die als Halteanschlag für die darunterliegende Sicherungsscheibe 5 dienen, wobei der untere Rand des Basisteils 3-B fest mit dem Schwingungsdämpferring 4 verbunden ist, z.B. durch Kleben, Klemmen oder Einbetten..

## Patentansprüche

1. Verbindungsanordnung zum lösbaren Verbinden zweier mit aufeinander ausgerichteten Öffnungen versehener Bauteile (MP1, MP2), bei der in einer Bohrung (O1) des einen zu verbindenden Teils (MP1) ein in einer Hülse (1) mit Hülsenkopf (1-1) geführter Bolzen (2) vorgesehen ist und am Bolzenende ein Verriegelungsteil (2-1) befestigt ist, das sich beim Eindrücken des Bolzens (2) in einer mit dem anderen Teil (MP2) in Verbindung stehender Blattfederanordnung (7) verhakt und bei dem ein auf dem Bolzen (2) bis zu einer Schulter (1-4) verschiebbares Entriegelungsteil (6) bei weiterem Eindrücken des Bolzens (2) die Blattfederanordnung (7) zum Lösen der Verbindung spreizt,
**dadurch gekennzeichnet,daß**
ein Schwingungsdämpferring (4) aus elastischem Material vorgesehen ist,
in dessen Öffnung die Hülse (1) angeordnet ist und auf dem das mit dem Hülsenkopf (1-1) verbundene erste Bauteil (MP1) aufliegt,
daß der Schwingungsdämpferring (4) eine konzentrisch zu seiner Achse angeordnete periphere Nut (N) aufweist zur Aufnahme des Randes der Öffnung (02) im zweiten Bauteil (MP2)
daß die Blattfederanordnung (7) mit dem Schwingungsdämpferring (4) verbunden ist und
daß an der den Bauteilen (MP1,MP2) abgewandten Seite des Schwingungsdämpferringes (4) anschlagbildende Mittel (5) bezüglich der Öffnung (O2) des zweiten Bauteils (MP2) vorgesehen sind.

2. Anordnung nach Anspruch 1,
**dadurch gekennzeichnet, daß**
das anschlagbildende Mittel ein Scheibenring (5) ist, dessen Außendurchmesser größer als der Durchmesser der Öffnung (02) im zweiten Bauteil (MP2) ist.

3. Anordnung nach Anspruch 1 oder 2,
**dadurch gekennzeichnet, daß**
das anschlagbildende Mittel mittels Klammern (8) mit dem Schwingungsdämpferring (4) verbunden ist, wobei jeweils ein Klammerende im Schwingungsdämpferring (49) eingebettet ( z.B. einvulkanisiert oder vergossen) ist.

4. Anordnung nach Anspruch 1,
**dadurch gekennzeichnet, daß**
die Blattfederanordnung (7) durch Einbettung (z.B. Einvulkanisieren oder Vergießen) im Schwingungsdämpferring (4) mit diesem verbunden ist.

5. Anordnung nach Anspruch 1,
**dadurch gekennzeichnet, daß**
das anschlagbildende Mittel und/oder die Blattfederanordnung (7) mit einer die Innenwandung des Schwingungsdämpferrings (4) übergreifenden Klemmhalterung (9) verbunden sind.

6. Anordnung nach Anspruch 1,
**dadurch gekennzeichnet, daß**
die Blattfederanordnung (7) ein ringförmig gebogenes Basisteil (3B) ausweist, von dessen oberem Rand mindestens zwei sich zum freien Ende hin verjüngende und nach innen geneigte Blattfederarme (3-1, 3-2, 3-3) ausgehen,
daß deren freie Enden (3-1-1) kreisringsegmentförmig ausgebildet sind für einen formschlüssigen Eingriff in den zwischen Verriegelungsteil (2-1) und Entriegelungsteil (6) gebildeten ringförmigen Eingriffsraum (S) und
daß deren freie Enden durch das Entriegelungsteil (6) spreizbar ausgebildet sind.

7. Anordnung nach Anspruch 6,
**dadurch gekennzeichnet,**
**daß** die freien Enden der Blattfederarme (7, 7') nach außen gebogen (gewölbt) sind.

8. Anordnung nach Anspruch 6;
**dadurch gekennzeichnet,**
**daß** das Basisteil (3B) nach außen weisende Ausklinkungen (3-4, 3-5) aufweist.

9. Anordnung nach einem der Ansprüche 1 bis 8,
**dadurch gekennzeichnet, daß**
bei Eingriff der Blattfederarmenden in den zwischen Verriegelungsteil(2-1) und Entriegelungsteil (6) gebildeten Eingriffsraum (S) das Entriegelungsteil an den Blattfederarmen anliegt.

## Claims

1. Connecting arrangement for the detachable connection of two components (MP1, MP2) with openings aligned towards one another, where a bolt (2), which is guided in a bush (1) with bush head (1-1) is located in a hole (01) of one part being connected (MP1), and a locking part (2-1) is attached to the end of the bolt, which, when the bolt (2) is pressed in, engages into a leaf-spring arrangement connected to the other part (MP2), and where a releasing part (6), which can be moved up to a shoulder part (1-4) on the bolt, expands the leaf-spring arrangement (7) to release the connection when the bolt (2) is pressed in further,
**characterised in that**
a vibration-damping ring (4) of elastic material is provided, in whose opening a bush (1) is located, against which the first component (MP1) which is connected with the bush head (1-1) lies,
that the vibration-damping ring (4) has a peripheral groove (N) arranged concentrically to its axis, in order to receive the edge of the opening (02) in the second component (MP2), that the leaf-spring arrangement (7) is connected with the vibration-damping ring (4) and
that means of forming a stop (5) with reference to the opening (02) of the second component (MP2) are provided on the side of the vibration-damping ring (4) turned away from the components (MP1, MP2).

2. Arrangement in accordance with claim 1,
**characterised in that**
the means of forming a stop is a disk ring (5) whose outer diameter is greater than the diameter of the opening (02) in the second component (MP2).

3. Arrangement in accordance with claim 1 or 2
**characterised in that**
the means of forming a stop is connected with the vibration-damping ring (4) by means of clips (8), where in each case one end of the clip is connected by embedding in the vibration-damping ring (e.g. by vulcanising or casting in).

4. Arrangement in accordance with claim 1
**characterised in that**
the leaf-spring arrangement (7) is connected with the vibration-damping ring (4) by embedding (e.g. by vulcanising or casting in).

5. Arrangement in accordance with claim 1
**characterised in that**
the means of forming a stop and/or the leaf-spring arrangement (7) are connected with a clamping holder (9) hooking over the interior wall of the vibration-damping ring (4).

6. Arrangement in accordance with claim 1
**characterised in that**
leaf-spring arrangement (7) has a base (3B) bent in the form of a ring, from whose upper edge at least two leaf-spring arms (3-1, 3-2, 3-3) project, which are inclined inwards and which are tapered towards their
free end,
that their free ends (3-1-1) are shaped like a ring segment for a positive-locking fit into the engaging ring-shaped recess (S) between the locking part (2-1) and releasing part (6) and that their free ends are formed to be expanded by the releasing part (6).

7. Arrangement in accordance with claim 6
**characterised in that**
the free ends of the leaf-spring arms (7,7') are bent (curved) outwards.

8. Arrangement in accordance with claim 6
**characterised in that**
the base part (3B) has catches (3-4, 3-5) which point outwards.

9. Arrangement in accordance with claims 1 to 8
**characterised in that**
when the leaf-spring arms engage the engaging recess (S) between the locking part (2-1) and releasing part (6), the releasing part lies against the leaf-spring arms.

## Revendications

1. Dispositif d'assemblage pour l'assemblage amovible de deux éléments de construction (MP1, MP2) pourvus d'ouvertures orientés l'une vers l'autre, dans lequel il est prévu dans un alésage (01) de l'un des éléments à assembler (MP1) un goujon (2) guidé dans une douille (1) pourvue d'une tête de douille (1-1) et un élément de verrouillage (2-1) est fixé à l'extrémité du goujon et s'accroche lors de l'enfoncement du goujon (2) dans un dispositif de ressort à lames (7) relié à l'autre élément (MP2), et dans lequel un élément de déverrouillage (6) pouvant coulisser sur le goujon (2) jusqu'à un épaulement (1-4) écarte le dispositif de ressort à lames (7) lorsque le goujon (2) est enfoncé plus loin pour défaire l'assemblage, **caractérisé en ce qu'**il est prévu une bague amortissant les vibrations (4) en. matériau élastique, dans l'ouverture de laquelle la douille (1) est disposée et sur laquelle repose le premier élément de construction (MP1) relié à la tête de douille (1-1),
**en ce que** la bague amortissant les vibrations (4) présente une gorge (N) périphérique concentrique de son axe et destinée à recevoir le bord de l'ouverture (02) dans le deuxième élément de construction (MP2),
**en ce que** le dispositif de ressort à lames (7) est relié à la bague amortissant les vibrations (4) et
**en ce que** des moyens formant butée (5) sont prévus sur la face de la bague amortissant les vibrations (4) orientée à l'opposé des éléments de construction (MP1, MP2) par rapport à l'ouverture (O2) du deuxième élément de construction (MP2).

2. Dispositif selon la revendication 1, **caractérisé en ce que** le moyen formant butée est une bague coulissante (5) dont le diamètre extérieur est plus grand que le diamètre de l'ouverture (02) du deuxième élément de construction (MP2).

3. Dispositif selon la revendication 1 ou 2, **caractérisé en ce que** le moyen formant butée est assemblé par des agrafes (8) avec la bague amortissant les vibrations (4), chaque extrémité des agrafes étant incluse (par exemple par vulcanisation ou lors du moulage) dans la bague amortissant les vibrations (49).

4. Dispositif selon la revendication 1, **caractérisé en ce que** le dispositif de ressort à lames (7) est assemblé avec la bague amortissant les vibrations (4) par inclusion dans celle-ci (par exemple par vulcanisation ou lors du moulage).

5. Dispositif selon la revendication 1, **caractérisé en ce que** le moyen formant butée et/ou le dispositif de ressort à lames (7) sont assemblés par une fixation par serrage (9) saisissant la paroi intérieure de la bague amortissant les vibrations (4).

6. Dispositif selon la revendication 1, **caractérisé en ce que** le dispositif de ressort à lames (7) présente une partie de base (3B) recourbée en forme d'anneau, dont le bord supérieur porte au moins deux bras de ressort à lames (3-1, 3-2, 3-3) se rétrécissant vers leur extrémité libre et inclinés vers l'intérieur,
**en ce que** leurs extrémités libres (3-1-1) sont en forme de segment d'anneau circulaire en vue d'une prise par engagement de la forme dans l'espace de prise annulaire (S) formé entre l'élément de verrouillage (2-1) et l'élément de déverrouillage (6) et
**en ce que** leurs extrémités libres sont conformées de façon à pouvoir être écartées par l'élément de déverrouillage (6).

7. Dispositif selon la revendication 6, **caractérisé en ce que** les extrémités libres des bras de ressort à lames (7, 7') sont recourbées (bombées) vers l'extérieur.

8. Dispositif selon la revendication 6, **caractérisé en ce que** la partie de base (3B) présente des encoches (3-4, 3-5) orientées vers l'extérieur.

9. Dispositif selon l'une quelconque des revendications 1 à 8, **caractérisé en ce que** lorsque les bras de ressort à lames se mettent en prise dans l'espace de prise (S) formé entre l'élément de verrouillage (2-1) et l'élément de déverrouillage (6), l'élément de déverrouillage repose sur les bras de ressort à lames.
